# EUROPEAN PATENT APPLICATION

(11) **EP 3 073 698 A1**
(43) Date of publication of application: **28.09.2016**
(21) Application number: 13899302.7
(22) Date of filing: 13.12.2013
(51) Int. Cl.: H04L 29/06

(54) **METHOD FOR PROCESSING ADDRESS RESOLUTION PROTOCOL MESSAGE, FORWARDER AND CONTROLLER**

(71) Applicant: Huawei Technologies Co., Ltd., Longgang District Shenzhen, Guangdong 518129 (CN)
(72) Inventor: TAN, Shiyong, Shenzhen Guangdong 518129 (CN); CAI, Hui, Shenzhen Guangdong 518129 (CN); NI, Hui, Shenzhen Guangdong 518129 (CN)
(74) Representative: Gill Jennings & Every LLP
(86) International application number: PCT/CN2013/089377
(87) International publication number: WO 2015/085576

(57) **Abstract**

The present invention discloses a method for processing an address resolution protocol message, a switch, and a controller. The method includes: receiving, by a switch, a flow rule that corresponds to an ARP message and that is sent from a controller; and constructing, by the switch, an ARP message according to the received flow rule, and sending the ARP message, where the flow rule includes: a match rule that corresponds to an ARP message and an action set that corresponds to an ARP message. According to the present invention, ARP-mechanism-based interaction with an external device can be implemented.

## Description

### TECHNICAL FIELD

The present invention relates to the field of communications technologies, and in particular, to a method for processing an address resolution protocol (ARP, Address Resolution Protocol) message, a switch, and a controller.

### BACKGROUND

The OpenFlow protocol is a typical technology in software-defined networking (SDN, Software-Defined Networking). Network elements in the OpenFlow protocol include: a controller (OpenFlow Controller, OF Controller) and a switch (OpenFlow Switch, OF Switch). The controller is responsible for determining a forwarding action for a service flow according to a packet feature, and delivering a corresponding flow rule to the switch. The switch acquires and stores the flow rule, and performs a corresponding action on a subsequent packet that meets the flow rule, thereby implementing packet forwarding or processing. The flow rule includes: flow matching information and a processing action set that is correspondingly executed. The switch stores all flow matching information and action sets and installs the flow matching information and action sets to a corresponding flow table, and when a user packet arrives, the switch performs flow table matching, and performs a corresponding action according to a matching result of the flow table matching, to process the user packet.

The ARP is a link layer protocol, and helps an IP address and a media access control (MAC, Media Access Control) address of a network device correspond to an IP address and a MAC address of another network device. An ARP request message that carries a destination IP address is sent to obtain an Address Resolution Protocol response message that carries a destination MAC address, so that a network device obtains a MAC address of a communication peer.

However, in the prior art, a switch based on an OpenFlow model is a Layer 2 switch device (Switch), where the Layer 2 switch does not have a capability of processing an ARP message. Therefore, the switch cannot perform ARP-mechanism-based interaction with an external device that is connected to the switch.

### SUMMARY

Embodiments of the present invention provide a method for processing an ARP message, a switch, and a controller, to resolve a problem in the prior art that a switch based on an OpenFlow model cannot process an ARP message.

To resolve the foregoing technical problem, the embodiments of the present invention disclose the following technical solutions:
According to a first aspect, the present invention provides a method for processing an Address Resolution Protocol message, including:
   receiving, by a switch, a flow rule that corresponds to an ARP message and that is sent from a controller; and
   constructing, by the switch, an ARP message according to the received flow rule, and sending the ARP message, where
   the flow rule includes: a match rule that corresponds to an ARP message and an action set that corresponds to an ARP message.

In a first possible implementation manner of the first aspect, the flow rule includes an ARP response flow rule, and in the ARP response flow rule:
the match rule that corresponds to the ARP message includes the following information: a message type is ARP message; and a requested address is an IP address bound to a switch port; and
the action set that corresponds to the ARP message includes: constructing an ARP response message, where a media access control (MAC) address of the ARP response message is a MAC address corresponding to an IP address requested in a received ARP request message; and
correspondingly, the constructing, by the switch, an ARP message according to the received flow rule, and sending the ARP message specifically includes:
   receiving, by the switch, an ARP request message sent from an external device; performing matching between information carried in the ARP request message and the match rule in the ARP response flow rule, and if the matching succeeds, constructing an ARP response message according to the action set in the ARP response flow rule, and filling, in the ARP response message, a MAC address corresponding to an IP address requested in the received ARP request message; and then forwarding the ARP response message by using an ingress port of an ARP request packet.

In a second possible implementation manner of the first aspect, the flow rule includes a first ARP request flow rule, where in the first ARP request flow rule, the match rule that corresponds to the ARP message includes the following information: a packet type is IP packet; and a destination IP address is a preset IP address; and
the action set that corresponds to the ARP message includes: constructing a first ARP request message, where a destination IP address in the first ARP request message is the preset IP address; and a forwarding port number is a set forwarding port number or all forwarding port numbers; and
correspondingly, the constructing, by the switch, an ARP message according to the received flow rule, and sending the ARP message specifically includes:
receiving, by the switch, a user packet, if detecting that a MAC address corresponding to a destination IP address of the packet does not exist, performing matching between information about the user packet and the match rule in the first ARP request flow rule, and if the matching succeeds, constructing a first ARP request message according to the action set in the first ARP request flow rule, where a destination IP address in the first ARP request message is the preset IP address, and sending the first ARP request message by using a set forwarding port or all forwarding ports.
With reference to the second possible implementation manner of the first aspect, in a third possible implementation manner of the first aspect, in the first ARP request flow rule, the match rule that corresponds to the ARP message further includes the following information: a mask has a first mask value; and
correspondingly, the performing matching between information about the user packet and the match rule in the first ARP request flow rule specifically includes:
   determining whether the user packet is an IP packet, and if yes, determining whether a result of a predetermined operation on the destination IP address in the user packet and the first mask value is the same as a result of the predetermined operation on the preset IP address and the first mask value, where if they are the same, it is considered that the matching succeeds.

With reference to the second possible implementation manner of the first aspect or the third possible implementation manner of the first aspect, in a fourth possible implementation manner of the first aspect, the flow rule includes a second ARP request flow rule, and in the second ARP request flow rule:
the match rule that corresponds to the ARP message includes the following information: a packet type is that a MAC address corresponding to an IP address does not exist; and the action set that corresponds to the ARP message includes: forwarding to the controller; and
correspondingly, after the matching is performed between the information about the user packet and the match rule in the first ARP request flow rule, and the matching fails, the method further includes:
   performing, by the switch, matching between the information about the received user packet and the match rule in the second ARP request flow rule, and if the matching succeeds, forwarding the user packet to the controller according to the action set in the second ARP request flow rule; and receiving a third ARP request flow rule delivered by the controller, constructing a second ARP request message according to the third ARP request flow rule, and sending the second ARP request message, where in the third ARP request flow rule:
      the match rule that corresponds to the ARP message includes the following information: a matching cause value is that a MAC address corresponding to a first IP address does not exist; a packet type is IP packet; and a destination IP address is the first IP address; and
      the action set that corresponds to the ARP message includes: constructing a second ARP request message, where a destination IP address in the second ARP request message is the first IP address; and a forwarding port number is a set forwarding port number or all forwarding port numbers.

With reference to the second possible implementation manner of the first aspect, the third possible implementation manner of the first aspect, or the fourth possible implementation manner of the first aspect, in a fifth possible implementation manner of the first aspect, after the sending the ARP request message, the method further includes:
receiving, by the switch, an ARP response message sent from an external device, and constructing an ARP encapsulation flow rule according to the ARP response message; and receiving a data packet on a connection on which the user packet is located, performing matching between information about the data packet and a match rule in the ARP encapsulation flow rule, and if the matching succeeds, encapsulating a destination MAC address of the ARP response message into the data packet according to an action set in the ARP encapsulation flow rule, and then sending the encapsulated data packet, where in the ARP encapsulation flow rule, the match rule that corresponds to the ARP message includes the following information: a packet type is IP packet; and a destination IP address is a destination IP address in the user packet; and
the action set that corresponds to the ARP message includes: encapsulating a destination MAC address of a packet, where the destination MAC address is the destination MAC address of the ARP response message; and forwarding the packet, where a forwarding port number is an ingress port number of the ARP response message.

With reference to the first aspect, the first possible implementation manner of the first aspect, the second possible implementation manner of the first aspect, the third possible implementation manner of the first aspect, or the fourth possible implementation manner of the first aspect, in a sixth possible implementation manner of the first aspect, the receiving, by a switch, a flow rule that corresponds to an ARP message and that is sent from a controller specifically includes:
receiving, by the switch, one flow rule carrying OpenFlow message that is sent from the controller, where the one OpenFlow message carries multiple flow rules.

According to a second aspect, the present invention provides a switch, including:
a receiving unit, configured to receive a flow rule that corresponds to an ARP message and that is sent from a controller, and send the flow rule to an ARP processing unit; and
the ARP processing unit, configured to construct an ARP message according to the received flow rule, and send the ARP message, where the flow rule includes: a match rule that corresponds to an ARP message and an action set that corresponds to an ARP message.

In a first possible implementation manner of the second aspect, the ARP processing unit includes a first processing subunit, where
the receiving unit is further configured to receive an ARP request message sent from an external device; and send the ARP request message to the first processing subunit; and
the first processing subunit is configured to parse out an ARP response flow rule included in the received flow rule; after the ARP request message is received, perform matching between information carried in the ARP request message and the match rule in the ARP response flow rule, and if the matching succeeds, construct an ARP response message according to the action set in the ARP response flow rule, and fill, in the ARP response message, a MAC address corresponding to an IP address requested in the received ARP request message; and then forward the ARP response message by using an ingress port of an ARP request packet, where
in the ARP response flow rule, the match rule that corresponds to the ARP message includes the following information: a message type is ARP message; and a requested address is an IP address bound to a switch port; and the action set that corresponds to the ARP message includes: constructing an ARP response message, where a media access control (MAC) address of the ARP response message is a MAC address corresponding to an IP address requested in a received ARP request message; and forwarding the ARP response message, where a forwarding port number is an ingress port number of the ARP request packet.

In a second possible implementation manner of the second aspect, the ARP processing unit includes a second processing subunit, where
the receiving unit is further configured to receive a user packet, and forward the user packet to the second processing subunit; and
the second processing subunit is configured to parse out a first ARP request flow rule included in the received flow rule; and after the user packet is received, if it is detected that a MAC address corresponding to a destination IP address of the packet does not exist, perform matching between information about the user packet and the match rule in the first ARP request flow rule, and if the matching succeeds, construct a first ARP request message according to the action set in the first ARP request flow rule, where a destination IP address in the first ARP request message is a preset IP address, and send the first ARP request message by using a set forwarding port or all forwarding ports, where
in the first ARP request flow rule, the match rule that corresponds to the ARP message includes the following information: a packet type is IP packet; and a destination IP address is the preset IP address; and the action set that corresponds to the ARP message includes: constructing a first ARP request message, where a destination IP address in the first ARP request message is the preset IP address; and a forwarding port number is a set forwarding port number or all forwarding port numbers.

With reference to the second possible implementation manner of the second aspect, in a third possible implementation manner of the second aspect, in the first ARP request flow rule, the match rule that corresponds to the ARP message further includes the following information: a mask has a first mask value; and
correspondingly, the performing matching between information about the user packet and the match rule in the first ARP request flow rule specifically includes:
determining whether the user packet is an IP packet, and if yes, determining whether a result of a predetermined operation on the destination IP address in the user packet and the first mask value is the same as a result of the predetermined operation on the preset IP address and the first mask value, where if they are the same, it is considered that the matching succeeds.

With reference to the second possible implementation manner of the second aspect or the third possible implementation manner of the second aspect, in a fourth possible implementation manner of the second aspect, the second processing subunit is further configured to parse out a second ARP request flow rule included in the flow rule, after the matching is performed on the match rule in the first ARP request flow rule according to the user packet, and the matching fails, further perform matching between the information about the received user packet and the match rule in the second ARP request flow rule, and if the matching succeeds, forward the user packet to the controller according to the action set in the second ARP request flow rule; and receive a third ARP request flow rule that includes the destination IP address in the user packet and that is delivered by the controller, construct a second ARP request message according to the third ARP request flow rule, and send the second ARP request message, where
in the second ARP request flow rule, the match rule that corresponds to the ARP message includes the following information: a packet type is that a MAC address corresponding to an IP address does not exist; and the action set that corresponds to the ARP message includes: forwarding to the controller.

With reference to the second possible implementation manner of the second aspect, the third possible implementation manner of the second aspect, or the fourth possible implementation manner of the second aspect, in a fifth possible implementation manner of the second aspect, the switch further includes: a constructing unit, where
the receiving unit is further configured to receive an ARP response message sent from an external device, and send the ARP response message to the constructing unit; and receive a data packet on a connection on which the user packet is located, and send the data packet to the second processing subunit;
the constructing unit is configured to construct an ARP encapsulation flow rule according to the received ARP response message;
the second processing subunit is further configured to perform matching between information about the received data packet and a match rule in the ARP encapsulation flow rule constructed by the constructing unit, and after the matching succeeds, encapsulate a destination MAC address of the ARP response message into the data packet according to an action set in the ARP encapsulation flow rule, and then send the encapsulated data packet, where in the ARP encapsulation flow rule, the match rule that corresponds to the ARP message includes the following information: a packet type is IP packet; and a destination IP address is a destination IP address in the user packet; and
the action set that corresponds to the ARP message includes:
encapsulating a destination MAC address of a packet, where the destination MAC address is the destination MAC address of the ARP response message; and forwarding the packet, where a forwarding port number is an ingress port number of the ARP response message.

According to a third aspect, the present invention provides a controller, including:
a creating unit, configured to create a flow rule that corresponds to the ARP message, and output the flow rule to a sending unit, where the flow rule includes: a match rule that corresponds to the ARP message and an action set that corresponds to the ARP message; and
the sending unit, configured to send the received flow rule to a switch.

In a first possible implementation manner of the third aspect, the creating unit is specifically configured to create an ARP response flow rule, where in the ARP response flow rule:
the match rule that corresponds to the ARP message includes the following information: a message type is ARP message; and a requested address is an IP address bound to a switch port; and
the action set that corresponds to the ARP message includes: constructing an ARP response message, where a media access control (MAC) address of the ARP response message is a MAC address corresponding to an IP address requested in a received ARP request message; and forwarding the ARP response message, where a forwarding port number is an ingress port number of an ARP request packet.

In a second possible implementation manner of the third aspect, the creating unit is specifically configured to create a first ARP request flow rule, where in the first ARP request flow rule:
the match rule that corresponds to the ARP message includes the following information: a packet type is IP packet; and a destination IP address is a preset IP address; and
the action set that corresponds to the ARP message includes: constructing a first ARP request message, where a destination IP address in the first ARP request message is the preset IP address; and a forwarding port number is a set forwarding port number or all forwarding port numbers.

With reference to the second possible implementation manner of the third aspect, in a third possible implementation manner of the third aspect, the creating unit is further configured to create a second ARP request flow rule, where in the second ARP request flow rule:
the match rule that corresponds to the ARP message includes the following information: a packet type is that a MAC address corresponding to an IP address does not exist; and
the action set that corresponds to the ARP message includes: forwarding to the controller.

With reference to the third possible implementation manner of the third aspect, in a fourth possible implementation manner of the third aspect, the creating unit is further configured to receive a flow table request that is sent from the switch according to the second ARP request flow rule, and create a third ARP request flow rule, where in the third ARP request flow rule:
the match rule that corresponds to the ARP message includes the following information: a matching cause value is that a MAC address corresponding to a first IP address does not exist; a packet type is IP packet; and a destination IP address is the first IP address; and
the action set that corresponds to the ARP message includes: constructing a second ARP request message, where a destination IP address in the second ARP request message is the first IP address; and a forwarding port number is a set forwarding port number or all forwarding port numbers.

According to the method for processing an ARP message, the switch, and the controller that are provided in the present invention, a switch can receive a flow rule that corresponds to an ARP message and that is sent from a controller, where the flow rule includes a match rule that corresponds to an ARP message and an action set that corresponds to an ARP message, and the switch can construct an ARP message according to the received flow rule, and send the ARP message. Therefore, ARP-mechanism-based interaction with an external device is implemented.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a flowchart of processing performed by a switch to implement processing of an ARP message according to Embodiment 1 of the present invention;
FIG. 2 is a flowchart of processing performed by a switch to implement processing of an ARP response message according to Embodiment 1-1 of the present invention;
FIG. 3 is a flowchart of processing performed by a switch to implement, based on a flow rule 2, processing of an ARP request message according to Embodiment 1-2 of the present invention;
FIG. 4 is a flowchart of processing performed by a switch to implement, based on flow rules 2 to 4, processing of an ARP request message according to Embodiment 1-3 of the present invention;
FIG. 5 is a flowchart of processing performed by a controller to implement processing of an ARP message according to Embodiment 2 of the present invention;
FIG. 6 is a flowchart in which a controller and a switch collaborate to implement processing of an ARP response message according to Embodiment 3 of the present invention;
FIG. 7 is another flowchart in which a controller and a switch collaborate to implement processing of an ARP response message according to Embodiment 4 of the present invention;
FIG. 8 is a flowchart in which a controller and a switch collaborate to implement, based on a flow rule 2, processing of an ARP request message according to Embodiment 5 of the present invention;
FIG. 9 is a flowchart in which a controller and a switch collaborate to implement, based on flow rules 2 to 4, processing of an ARP request message according to Embodiment 6 of the present invention;
FIG. 10 is a schematic structural diagram of a controller according to Embodiment 7 of the present invention;
FIG. 11 is another schematic structural diagram of a controller according to Embodiment 7 of the present invention;
FIG. 12 is a schematic structural diagram of a switch according to Embodiment 8 of the present invention;
FIG. 13 is another schematic structural diagram of a switch according to Embodiment 8 of the present invention;
FIG. 14 is a schematic structural diagram of a switch according to Embodiment 9 of the present invention; and
FIG. 15 is a schematic structural diagram of a controller according to Embodiment 10 of the present invention.

### DESCRIPTION OF EMBODIMENTS

To make the objectives, technical solutions, and advantages of the embodiments of the present invention clearer, the following clearly describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

### Embodiment 1

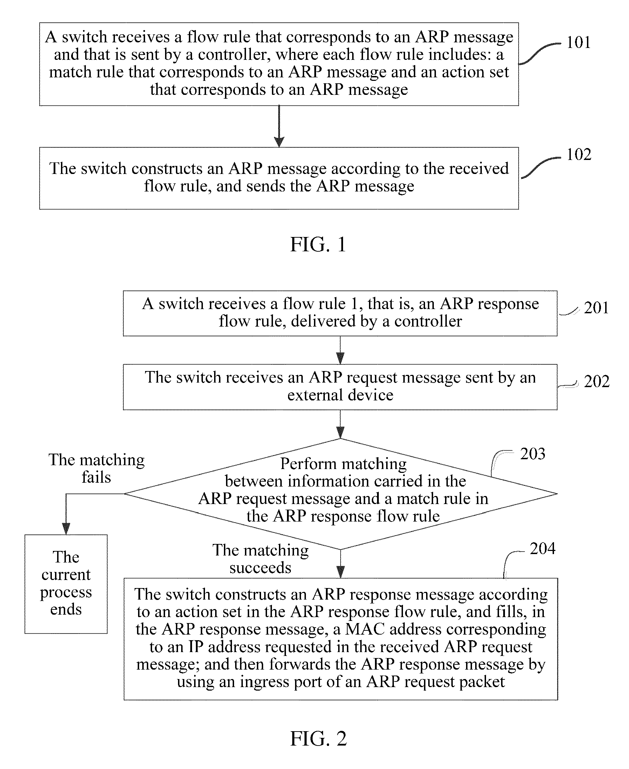

This embodiment provides a method of implementing, on a switch side, processing of an ARP message. Referring to FIG. 1, the method includes:
Step 101: A switch receives a flow rule that corresponds to an ARP message and that is sent from a controller, where each flow rule includes: a match rule that corresponds to an ARP message and an action set that corresponds to an ARP message.
Step 102: The switch constructs an ARP message according to the received flow rule, and sends the ARP message.

According to the method for processing an ARP message that is provided in this embodiment of the present invention, a switch can receive a flow rule that corresponds to an ARP message and that is sent from a controller, where the flow rule includes a match rule that corresponds to an ARP message and an action set that corresponds to an ARP message, and the switch can construct an ARP message according to the received flow rule, and send the ARP message. Therefore, ARP-mechanism-based interaction with an external device is implemented.

Based on different flow rules that are sent from the controller and that are received by the switch, the switch respectively executes corresponding processing processes. For the convenience of description, the following separately provides detailed descriptions in four embodiments.

### Embodiment 1-1

This embodiment describes processing by the switch when the flow rule received by the switch includes the following flow rule 1, that is, an ARP response flow rule.

### Flow rule 1: ARP response flow rule

In this ARP response flow rule, a match rule that corresponds to the ARP message includes the following information: a message type is ARP message; and a requested address is an IP address bound to a switch port; and

an action set that corresponds to the ARP message includes: constructing an ARP response message, where a media access control (MAC) address of the ARP response message is a MAC address corresponding to an IP address requested in a received ARP request message. Optionally, the MAC address corresponding to the IP address requested in the received ARP request message is filled in as the media access control (MAC) address of the ARP response message. The action set that corresponds to the ARP message is not limited to the foregoing content, for example, in a feasible embodiment, the action set that corresponds to the ARP message may further include: forwarding the ARP response message, where a forwarding port number is an ingress port number of an ARP request packet.

The ARP response flow rule is used to instruct the switch how to process an ARP response message, so that when an external device uses the switch as a destination receiving party of an ARP request message, the switch can construct an ARP response message, to send a MAC address of the switch to the external device.

Step 102 specifically includes:
receiving, by the switch, an ARP request message sent from an external device; performing matching between information carried in the ARP request message and the match rule in the ARP response flow rule, and if the matching succeeds, constructing an ARP response message according to the action set in the ARP response flow rule, and filling, in the ARP response message, a MAC address corresponding to an IP address requested in the received ARP request message; and then forwarding the ARP response message by using the ingress port of the ARP request packet.

Referring to FIG. 2, the processing by the switch includes:
Step 201: The switch receives the flow rule 1, that is, the ARP response flow rule, delivered by the controller.
Step 202: The switch receives an ARP request message sent from an external device.
Step 203: The switch performs matching between information carried in the ARP request message and the match rule in the ARP response flow rule, and if the matching succeeds, step 204 is performed; or if the matching fails, the current process ends.
Step 204: The switch constructs an ARP response message according to the action set in the ARP response flow rule, and fills, in the ARP response message, a MAC address corresponding to an IP address requested in the received ARP request message; and then forwards the ARP response message by using the ingress port of the ARP request packet.

According to the method for processing an Address Resolution Protocol message that is provided in this embodiment of the present invention, an ARP request message sent from an external device can be processed, and according to an ARP response flow rule, an ARP response message can be constructed, and the ARP response message can be sent to the external device. Therefore, ARP-mechanism-based interaction with the external device is implemented.

### Embodiment 1-2

This embodiment describes processing by the switch when the flow rule received by the switch includes the following flow rule 2, that is, a first ARP request flow rule.

### Flow rule 2: First ARP request flow rule

In the first ARP request flow rule, a match rule that corresponds to the ARP message includes the following information: a packet type is IP packet; and a destination IP address is a preset IP address, where the match rule that corresponds to the ARP message is not limited to the foregoing information, and optionally, the match rule that corresponds to the ARP message further includes the following information: a mask has a mask value; and

an action set that corresponds to the ARP message includes: constructing a first ARP request message, where a destination IP address in the first ARP request message is the preset IP address; and a forwarding port number is a set forwarding port number or all forwarding port numbers.

Optionally, in the first ARP request flow rule, the match rule that corresponds to the ARP message may further include: a matching cause value is that a MAC address corresponding to an IP address does not exist.

The first ARP request flow rule is used to: when the switch needs to send an ARP request message to an external device, to obtain a MAC address of the external device, instruct the switch to construct the ARP request message.

Step 102 specifically includes:
receiving, by the switch, a user packet, if detecting that a MAC address corresponding to a destination IP address of the packet does not exist, performing matching between information about the user packet and the match rule in the first ARP request flow rule, and if the matching succeeds, constructing a first ARP request message according to the action set in the first ARP request flow rule, where a destination IP address in the first ARP request message is the preset IP address, and sending the first ARP request message by using a set forwarding port or all forwarding ports.

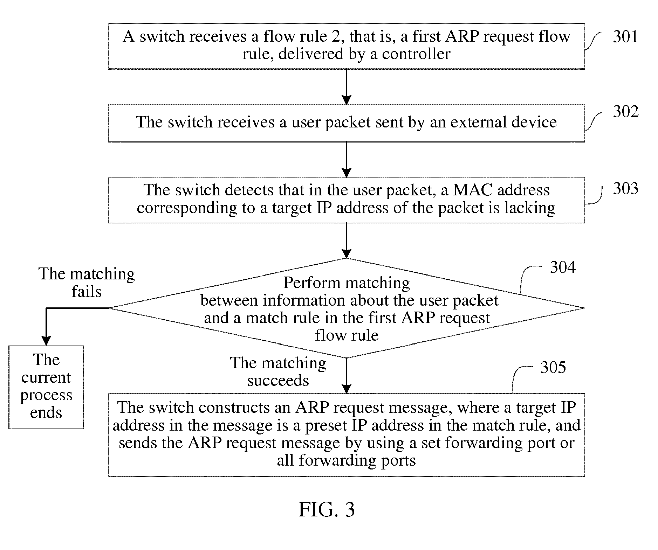

Referring to FIG. 3, the processing by the switch includes:
Step 301: The switch receives the flow rule 2, that is, the first ARP request flow rule, delivered by the controller.
Step 302: The switch receives a user packet sent from an external device.
Step 303: The switch detects that in the user packet, a MAC address corresponding to a destination IP address of the packet does not exist.
Step 304: The switch performs matching between information about the user packet and the match rule in the first ARP request flow rule, and if the matching succeeds, step 305 is performed; or if the matching fails, the current process ends.
   Optionally, in this step, when in this first ARP request flow rule: the match rule that corresponds to the ARP message further includes the following information: a mask has a first mask value, the performing, by the switch, matching between information about the user packet and the match rule in the first ARP request flow rule specifically includes: determining whether the user packet is an IP packet, and if yes, determining whether a result of a predetermined operation on the destination IP address in the user packet and the first mask value is the same as a result of the predetermined operation on the preset IP address in the match rule and the first mask value, where if they are the same, it is considered that the matching succeeds.
Step 305: The switch constructs an ARP request message according to the action set in the first ARP request flow rule, where a destination IP address in the ARP request message is the preset IP address in the match rule, and sends the ARP request message by using the set forwarding port or all the forwarding ports.

According to the method for processing an Address Resolution Protocol message that is provided in this embodiment of the present invention, a user packet sent from an external device can be processed, and according to a first ARP request flow rule, an ARP request message can be constructed, and the ARP request message can be sent to the external device. Therefore, ARP-mechanism-based interaction with the external device is implemented.

### Embodiment 1-3

This embodiment describes processing by the switch when the flow rule received by the switch includes both a flow rule 2, that is, a first ARP request flow rule, and a flow rule 3, that is, a second ARP request flow rule.

### Flow rule 3: Second ARP request flow rule

In the second ARP request flow rule, a match rule that corresponds to the ARP message includes the following information: a packet type is that a MAC address corresponding to an IP address does not exist; and an action set that corresponds to the ARP message includes: forwarding to the controller.

### Flow rule 4: Third ARP request flow rule

In the third ARP request flow rule, a match rule that corresponds to the ARP message includes the following information: a matching cause value is that a MAC address corresponding to a first IP address does not exist; a packet type is IP packet; and a destination IP address is the first IP address; and an action set that corresponds to the ARP message includes: constructing a second ARP request message, where a destination IP address in the second ARP request message is the first IP address; and a forwarding port number is a set forwarding port number or all forwarding port numbers.

Therefore, in the foregoing embodiment, after the matching is performed between the information about the user packet and the match rule in the first ARP request flow rule, and the matching fails, the method further includes:
performing, by the switch, matching between the information about the received user packet and the match rule in the second ARP request flow rule, and if the matching succeeds, forwarding the user packet to the controller according to the action set in the second ARP request flow rule; and receiving the third ARP request flow rule delivered by the controller, constructing a second ARP request message according to the third ARP request flow rule, and sending the second ARP request message.

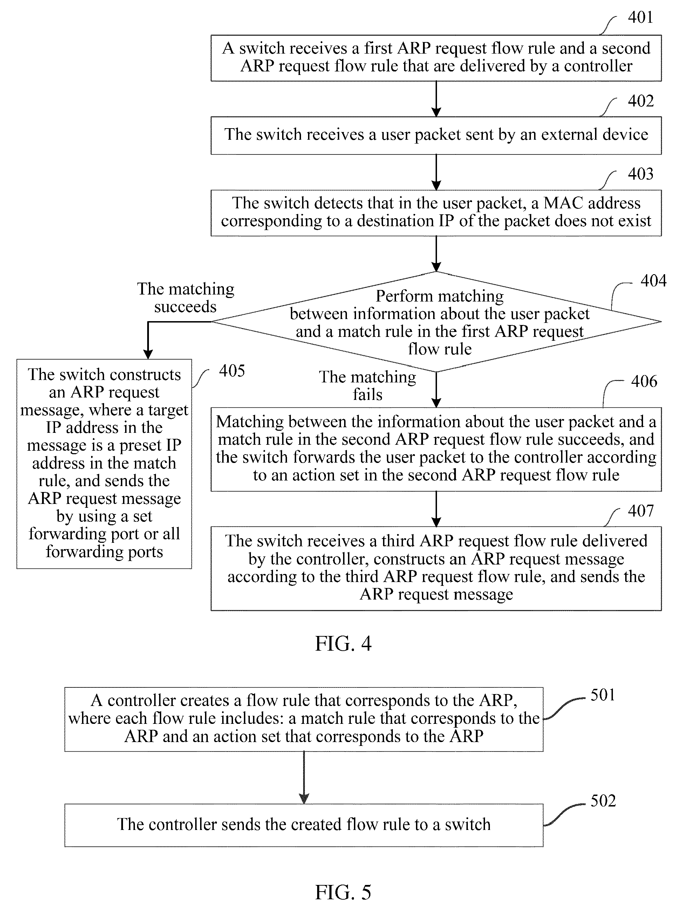

Referring to FIG. 4, the processing by the switch includes:
Step 401: The switch receives the first ARP request flow rule and the second ARP request flow rule that are delivered by the controller.

In this step, a specific description about the first ARP request flow rule is completely the same as the description about the flow rule in Embodiment 1-2.
Step 402: The switch receives a user packet sent from an external device.
Step 403: The switch detects that in the user packet, a MAC address corresponding to a destination IP address of the packet does not exist.
Step 404: The switch performs matching between information about the user packet and the match rule in the first ARP request flow rule, and if the matching succeeds, step 405 is performed; or if the matching fails, step 406 is performed.
Step 405: The switch constructs an ARP request message according to the action set in the first ARP request flow rule, where a destination IP address in the ARP message is a preset IP address, and sends the ARP request message by using a set forwarding port or all forwarding ports, and the current process ends.
Step 406: The switch performs matching between the information about the received user packet and the match rule in the second ARP request flow rule, and if the matching succeeds, forwards the user packet to the controller according to the action set in the second ARP request flow rule.
   The switch sends a flow table request to the controller according to the second ARP request flow rule, where the request carries a destination IP address that currently needs to be requested, so that after finding a MAC address corresponding to the destination IP address that currently needs to be requested and that is carried in the flow table request, the controller creates a third ARP request flow rule, and then sends the third ARP request flow rule to the switch, to ensure that the switch can construct a required ARP request message.
Step 407: The switch receives the third ARP request flow rule delivered by the controller, constructs an ARP request message according to the third ARP request flow rule, and sends the ARP request message.

Optionally, in Embodiment 1-2 and Embodiment 1-3, after the switch sends the ARP request message, the switch may further create an ARP encapsulation flow rule, to ensure that subsequently, after receiving a data packet that is on a same connection, the switch can directly encapsulate a corresponding MAC address into the data packet according to the ARP encapsulation flow rule. A specific implementation includes:
receiving, by the switch, an ARP response message sent from an external device, and constructing an ARP encapsulation flow rule according to the ARP response message; and receiving a data packet on a connection on which the user packet is located, performing matching between information about the data packet and a match rule in the ARP encapsulation flow rule, and if the matching succeeds, encapsulating a destination MAC address of the ARP response message into the data packet according to an action set in the ARP encapsulation flow rule, and then sending the encapsulated data packet, where
in the ARP encapsulation flow rule, the match rule that corresponds to the ARP message includes the following information: a packet type is IP packet; and a destination IP address is a destination IP address in the user packet, where the match rule that corresponds to the ARP message is not limited to the foregoing information, and optionally, the match rule that corresponds to the ARP message further includes that following information: a mask has a mask value; and
the action set that corresponds to the ARP message includes: encapsulating a destination MAC address of a packet, where the destination MAC address is the destination MAC address of the ARP response message; and forwarding the packet, where a forwarding port number is an ingress port number of the ARP response message.

According to the method for processing an Address Resolution Protocol message that is provided in this embodiment of the present invention, a user packet sent from an external device can be processed; in a case in which matching performed on information about the user packet and a match rule in a first ARP request flow rule does not succeed, matching may be performed on the information about the user packet and a match rule in a second ARP request flow rule; and the user packet can be sent to a controller, and according to a third ARP request flow rule delivered by the controller, an ARP request message can be constructed, and the ARP request message can be sent to the external device. Therefore, ARP-mechanism-based interaction with the external device is implemented.

It should be noted that, all forwarding port numbers in Embodiment 1 of the present invention are particular port number identifiers, and are used to represent all ports of the switch. The receiving, by a switch, a flow rule that corresponds to an ARP message and that is sent from a controller specifically includes: receiving, by the switch, one flow rule carrying OpenFlow message that is sent from the controller, where the one OpenFlow message carries multiple flow rules; or receiving, by the switch, multiple flow rule carrying OpenFlow messages that are sent from the controller, where the multiple OpenFlow messages carry multiple flow rules. Adding multiple flow rules to one OpenFlow message by the controller can save a network resource.

### Embodiment 2

This embodiment provides a method of implementing, on a controller side, processing of an ARP message. Referring to FIG. 5, the method includes:
Step 501: A controller creates a flow rule that corresponds to the ARP message, where each flow rule includes: a match rule that corresponds to the ARP message and an action set that corresponds to the ARP message.
Step 502: The controller sends the created flow rule to a switch.

In the process shown in FIG. 5, each created flow rule includes a match rule that corresponds to the ARP message and an action set that corresponds to the ARP message, which can ensure that subsequently, after the switch succeeds in matching according to a corresponding match rule, the switch performs processing according to a corresponding action set, to complete processing of an ARP message.

In step 501, the controller may create, according to a feature of the ARP, flow rules corresponding to various ARP message processing, for example, may create any one or more of flow rules in Embodiment 1. The flow rules include: a flow rule 1: an ARP response flow rule, a flow rule 2: a first ARP request flow rule, a flow rule 3: a second ARP request flow rule, and a flow rule 4: a third ARP request flow rule.

Certainly, to ensure that the controller can create the flow rule 1, the controller needs to acquire in advance various information about the switch, so as to create a match rule and an action set that are in the flow rule. Therefore, in an implementation manner of Embodiment 2, before step 501, the method further includes: Step 500: The controller acquires a correspondence between a switch port of the switch and an IP address and a MAC address of the port.

There are multiple implementation manners of step 500, for example:
a manner 1: directly acquiring, by the controller, the correspondence between a switch port of the switch and an IP address and a MAC address of the port according to a preset static configuration or from a third-party device; and
a manner 2: acquiring, by the controller, first information according to a preset static configuration or from a third-party device, where the first information includes: a switch identifier, a switch port identifier, and a port IP address corresponding to the switch port identifier; receiving second information reported by the switch, where the second information includes: the switch port identifier and a MAC address corresponding to the switch port identifier; and acquiring a correspondence between the switch identifier, the switch port identifier, and an IP address and a MAC address of the port according to the first information and the second information.

Optionally, when the flow rules created by the controller include the flow rule 4, that is, the third ARP request flow rule, in the process shown in FIG. 5, after step 502, the method further includes the following steps: Step 503: The controller receives a flow table request that is sent from the switch according to the second ARP request flow rule, where the request carries a destination IP address that currently needs to be requested. Step 504: If finding a MAC address corresponding to the destination IP address that currently needs to be requested and that is carried in the flow table request, the controller creates the third ARP request flow rule, and then sends the third ARP request flow rule to the switch, to ensure that the switch can construct a required ARP request message.

According to the method for processing an ARP message that is provided in this embodiment of the present invention, a controller can construct a flow rule according to a feature of the ARP message, where the constructed flow rule includes a match rule that corresponds to the ARP message and an action set that corresponds to the ARP message, so that a switch implements ARP-mechanism-based interaction with an external device.

It should be noted that, all forwarding port numbers in Embodiment 2 of the present invention are particular port number identifiers, and are used to represent all ports of the switch. If the controller creates multiple flow rules in step 501, in step 502, the controller may add the created multiple flow rules to one OpenFlow message, and send the one OpenFlow message to the switch; or the controller may respectively add the created multiple flow rules to multiple OpenFlow messages, and send the multiple OpenFlow messages to the switch. This method can save a network resource.

For easier understanding of a process in which the controller and the switch collaborate to complete a service, the following describes a process of the collaboration between the controller and the switch in four embodiments.

### Embodiment 3

This embodiment describes, based on the flow rule 1, that is, the ARP response flow rule, a complete process of collaboration between a controller and a switch, to implement that the switch constructs and sends an ARP response message.

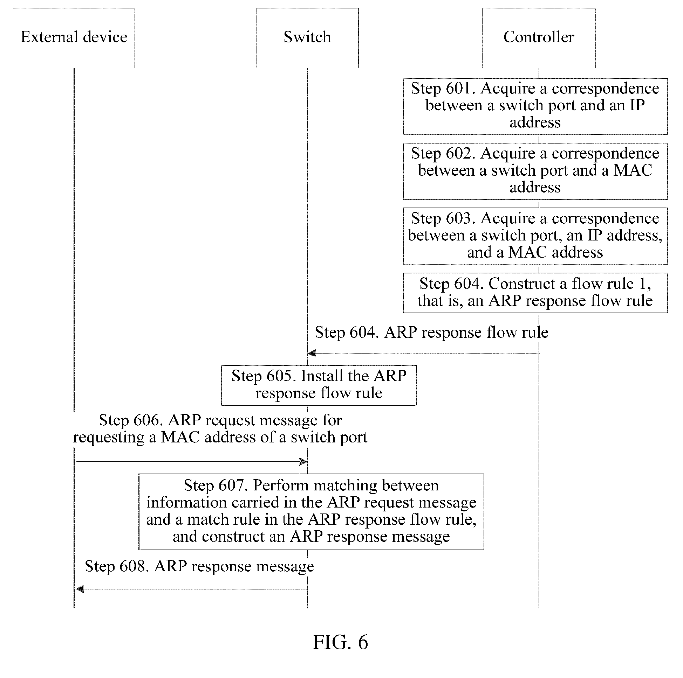

In addition, this embodiment is implemented in the manner 2 of step 500 that is described in Embodiment 2. Referring to FIG. 6, the process of the collaboration between the controller and the switch includes the following steps:
Step 601: The controller acquires a correspondence between a switch port and an IP address.

Herein, the controller may acquire the correspondence between a switch port and an IP address by using a preset static configuration, or may acquire the correspondence between a switch port and an IP address from a third-party system, for example, an external gateway or operation and maintenance system.

In this step, the following information may be stored in the controller:
[switch identifier switch port number IP address].

The switch identifier is used to identify the switch, and the switch port number is used to identify a switch port, where the switch identifier may be a switch ID number or a switch name, or any symbol that enables the controller to identify the switch.

Step 602: The controller acquires a correspondence between a switch port and a MAC address.

Herein, optionally, the correspondence between a switch port and a MAC address may be reported by the switch to the controller.

In this step, the following information may be stored in the controller:
[switch identifier switch port number MAC address].

The switch identifier is used to identify the switch, and the switch port number is used to identify a switch port, where the switch identifier may be a switch ID number or a switch name, or any symbol that enables the controller to identify the switch.

Step 603: The controller acquires a correspondence between a switch port, an IP address, and a MAC address.

In this step, the following information may be stored in the controller:
[switch identifier switch port number IP address MAC address].

The controller acquires the correspondence between a switch port, an IP address, and a MAC address according to the switch identifier and a switch port identifier.

The switch identifier is used to identify the switch, and the switch port number is used to identify a switch port, where the switch identifier may be a switch ID number or a switch name, or any symbol that enables the controller to identify the switch.

Step 604: The controller constructs a flow rule 1, that is, an ARP response flow rule, and delivers the flow rule to the switch.

The ARP response flow rule is used to subsequently instruct the switch how to process an ARP response message, so that when an external device uses the switch as a destination receiving party of an ARP request message, the switch can construct an ARP response message, to send a MAC address of the switch to the external device.

Specifically, in the ARP response flow rule:
a match rule corresponding to the ARP includes but is not limited to: 1) an ARP message type; and 2) a requested address is an IP address bound to a switch port; and
an action set that corresponds to the ARP message includes but is not limited to: 1) constructing an ARP response message, where a MAC address corresponding to an IP address requested in the received ARP request message is filled in as a MAC address of the message; and 2) forwarding the ARP response message, where a forwarding port number is an ingress port number of an ARP request packet.

A description implementation method of the ARP response flow rule is as follows:
<flow rule installation message> : = {flow match rule, <flow table processing action>}, where a flow table match rule is as follows:
   OXM_OF_ETH_TYPE = 0x0806
   OXM_OF_ARP_THA = IP address bound to switch port
   a corresponding action set is as follows:
      OFPAT_CONSTRUCT_ARP = XXXX (constructing an ARP message, where a MAC address corresponding to an IP address requested in an ARP request message is filled in as a destination MAC address in the message)
      OFPAT_OUTPUT = XXXX (an included port number is an ingress port number of an ARP request packet).

In step 604, when the flow rule 1 is delivered to the switch, in a scenario in which the switch has multiple ports, for each port, one flow rule 1 corresponding to the port is created, and the controller may deliver the multiple flow rules 1 to the switch, where the multiple rules may be sent in one OpenFlow message, or may be sent in multiple OpenFlow messages.

Step 605: The switch receives and installs the ARP response flow rule.

Step 606: The switch receives an ARP request message that is sent from an external device to request a MAC address of a switch port.

Step 607: The switch performs matching between information carried in the ARP request message and a match rule in the ARP response flow rule, and after the matching succeeds, constructs an ARP response message according to an action set in the ARP response flow rule, and fills, in the ARP response message, a MAC address corresponding to an IP address requested in the received ARP request message.

Herein, the ARP request message is of an ARP message type, and the requested address is an IP address bound to a switch port; therefore, the matching between the information carried in the ARP request message and the match rule that corresponds to the ARP message and that is in the ARP response flow rule can succeed.

Step 608: The switch sends the ARP response message to the external device according to the action set in the ARP response flow rule by using an ingress port of an ARP request packet.

According to the method for processing an Address Resolution Protocol message that is provided in this embodiment of the present invention, an ARP request message sent from an external device can be processed, and according to an ARP response flow rule, an ARP response message can be constructed, and the ARP response message can be sent to the external device. Therefore, ARP-mechanism-based interaction with the external device is implemented.

### Embodiment 4

This embodiment describes, still based on the flow rule 1, that is, the ARP response flow rule, a complete process of collaboration between a controller and a switch, to implement that the switch constructs and sends an ARP response message.

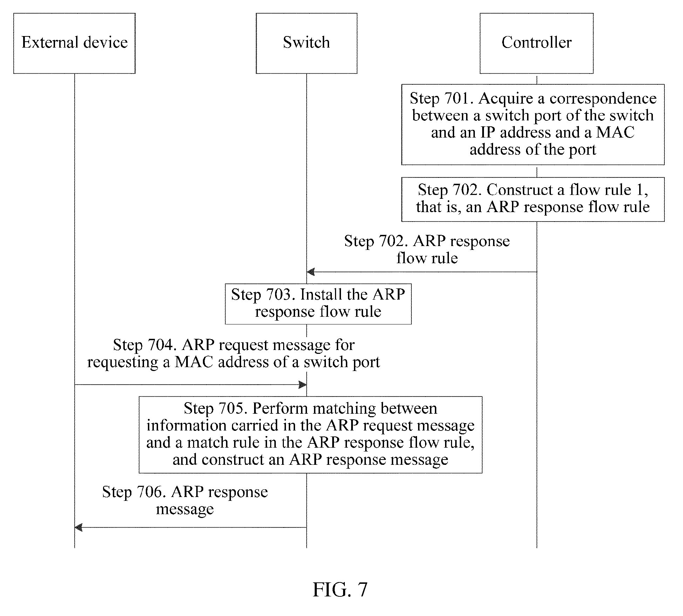

A difference from Embodiment 3 is that: this embodiment is implemented in the manner 1 of step 500 that is described in Embodiment 2. Referring to FIG. 7, the process of the collaboration between the controller and the switch includes the following steps:
Step 701: The controller directly acquires a correspondence between a switch port of the switch and an IP address and a MAC address of the port according to a preset static configuration or from a third-party device.

Herein, a third-party system may be an external gateway or operation and maintenance system.

In this step, the following information may be stored in the controller:
[switch identifier switch port number IP address MAC address].

In the configuration file, the switch identifier is used to identify the switch, and the switch port number is used to identify a switch port, where the switch identifier in the configuration file may be an ID number or a switch name, or any symbol that enables the controller to identify the switch.

All descriptions of step 702 to step 706 are the same as those of step 604 to step 608.

### Embodiment 5

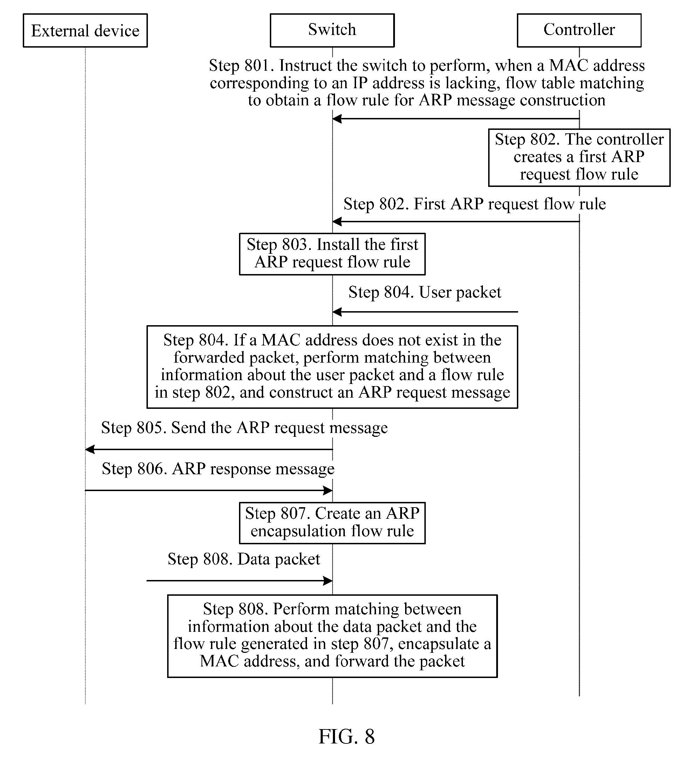

This embodiment describes, based on the flow rule 2, that is, the first ARP request flow rule, a complete process of collaboration between a controller and a switch, to implement that the switch constructs and sends an ARP request message. Referring to FIG. 8, the process includes the following steps:
Step 801: The controller instructs the switch to perform, in a state in which a MAC address corresponding to an IP address does not exist, flow table matching to obtain a flow rule for ARP message construction.

This step is an optional step. The switch may be instructed by the controller by using a notification message.

Certainly, this step may also be replaced as follows: The switch performs a default configuration, to perform, in a state in which a MAC address corresponding to an IP address does not exist, flow table matching to obtain a flow rule for ARP message construction.

Step 802: The controller creates a first ARP request flow rule, and delivers the flow rule to the switch.

Herein, in the first ARP request flow rule:
a match rule includes: 1) a matching cause value is that a MAC address corresponding to an IP address does not exist; 2) a packet type is IP packet; 3) a destination IP address is a preset IP address; and 4) a mask has a first mask value, for example, XXXX, where the item 1) is an optional item; and
an action set includes: 1) constructing an ARP request message, where a destination IP address in the ARP request message is the preset IP address; and 2) a forwarding port number is a set forwarding port number or all forwarding port numbers.

In 2) of the action set, when the forwarding port number is a set forwarding port number, the particular forwarding port number may be determined according to a routing protocol; or when the forwarding port number is all forwarding port numbers, a message is sent in a flood Flood manner.

Step 803: The switch receives and installs the first ARP request flow rule.

Step 804: The switch receives a user packet, and the switch detects that a MAC address corresponding to a destination IP address of the packet does not exist, performs matching between information about the user packet and a match rule in the first ARP request flow rule, and if the matching succeeds, constructs an ARP request message according to an action set in the first ARP request flow rule, where a destination IP address in the message is a preset IP address in the match rule, and then step 805 is performed; or if the matching fails, the current process ends.

Optionally, in this step, that the matching succeeds means that a matching cause is that a MAC address corresponding to an IP address does not exist (optional); a packet type is IP packet; a result of a set operation that is performed on the destination IP address of the packet and the first mask value that is included in the first ARP request flow rule is a result of a set operation that is performed on the destination IP and the first mask value that are included in the first ARP request flow rule.

Step 805: The switch sends the ARP request message according to the action set in the first ARP request flow rule by using a set forwarding port or all forwarding ports.

Step 806: The switch receives an ARP response message sent from an external device.

Step 807: The switch constructs an ARP encapsulation flow rule according to the received ARP response message and according to the instruction in step 801.

Herein, the ARP encapsulation flow rule is used to ensure that after receiving a subsequent data packet that is on a same connection, the switch can directly encapsulate, according to the ARP encapsulation flow rule, an acquired corresponding MAC address into the data packet, without a need to send an ARP request message each time to acquire a MAC address of the external device.

In the ARP encapsulation flow rule created by the switch:
a match rule that corresponds to the ARP message includes: 1) a packet type is IP packet; 2) a destination IP address is a destination IP address in the user packet; and 3) a mask has a third mask value, where the item 3) is an optional item; and
an action set that corresponds to the ARP message includes: 1) encapsulating a destination MAC address of a packet, where 2) the destination MAC address is a destination MAC address of the ARP response message; and 3) forwarding the packet, where 4) a forwarding port number is an ingress port number of the ARP response message.

A description implementation method of the ARP encapsulation flow rule is as follows:
<flow rule installation message> : = {flow match rule, <flow table processing action>}, where
   a flow table match rule is as follows:
   OXM_OF_ETH_TYPE = 0x0800
   OXM_OF_ENCAP_MAC = destination MAC address of ARP response message a corresponding action set is as follows:
   OFPAT_OUTPUT = XXXX (an included port number is an ingress port number of the ARP response message).

Step 808: A subsequent data packet reaches the switch, and the switch performs matching between information about the data packet and a match rule in an ARP encapsulation flow rule, and if the matching succeeds, performs an action set in the ARP encapsulation flow rule, to encapsulate a destination MAC address of the received ARP response message as a MAC address of the data packet, and forward the data packet from an ingress port of the ARP response message.

### Embodiment 6

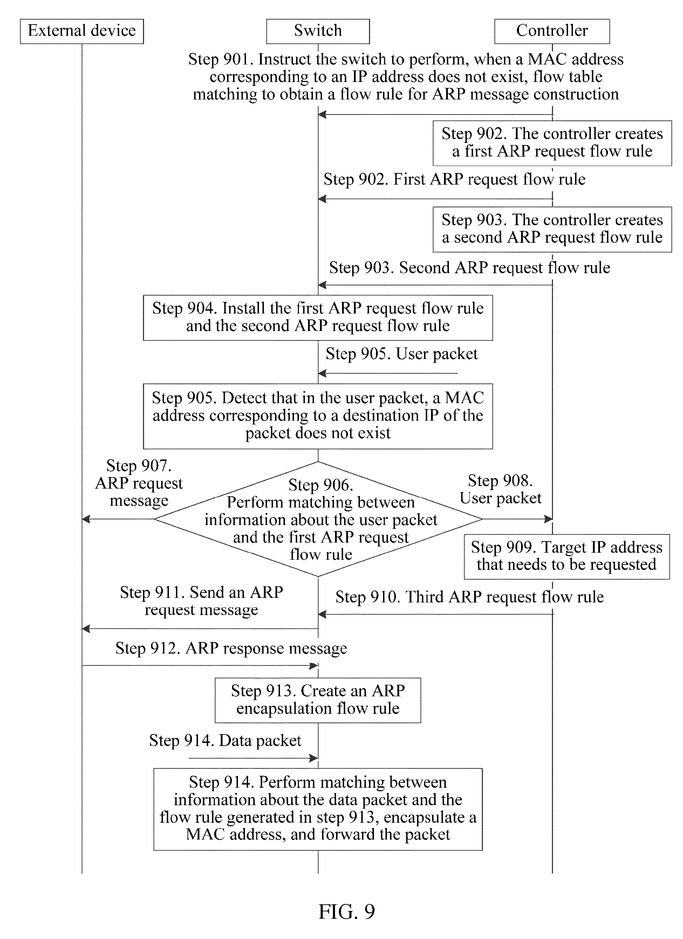

This embodiment describes, based on the flow rules 2 to 4, that is, three ARP request flow rules, a complete process of collaboration between a controller and a switch, to implement that the switch constructs and sends an ARP request message. Referring to FIG. 9, the process includes the following steps:
All descriptions of step 901 and step 902 are the same as those of step 801 and step 802.

Step 903: The controller creates a second ARP request flow rule, and delivers the second ARP request flow rule to the switch.

The second ARP request flow rule is used to: when subsequently the switch cannot obtain a corresponding match rule from the first ARP request flow rule through matching, and therefore cannot construct an ARP request message, instruct the switch to request a new ARP request flow rule from the controller.

Specifically, in the second ARP request flow rule:
a match rule that corresponds to the ARP message includes: 1) a packet type is that a MAC address corresponding to an IP address does not exist; and
an action set that corresponds to the ARP message includes: 1) forwarding to the controller.

Step 904: The switch receives and installs the first ARP request flow rule and the second ARP request flow rule.

Step 905: The switch receives a user packet sent from an external device, and detects that in the user packet, a MAC address corresponding to a destination IP address of the packet does not exist.

Step 906: The switch performs matching between information about the user packet and a match rule in the first ARP request flow rule, and if the matching succeeds, step 907 is performed; or if the matching fails, step 908 is performed.

In the first ARP request flow rule, a match rule that corresponds to the ARP message includes: 1) a packet type is IP packet; 2) a destination IP address is a preset IP address; and 3) a mask has a first mask value, where the item 3) is an optional item; and
an action set that corresponds to the ARP message includes but is not limited to: 1) constructing an ARP request message, where a destination IP address in the message is the preset IP address; and 2) a forwarding port number is a set forwarding port number or all forwarding port numbers.

If the matching between the information about the user packet and the match rule in the first ARP request flow rule succeeds, processing is performed according to the corresponding action set.

Step 907: The switch constructs an ARP request message according to an action set in the first ARP request flow rule, where a destination IP address in the message is a preset IP address, and sends the ARP request message by using a set forwarding port or all forwarding ports, and step 912 is performed.

Step 908: The switch performs matching between the information about the received user packet and a match rule in the second ARP request flow rule, and after the matching succeeds, forwards the user packet to the controller according to an action set in the second ARP request flow rule.

Herein, in the second ARP request flow rule:
the match rule that corresponds to the ARP message includes: 1) a packet type is that a MAC address corresponding to an IP address does not exist; and the action set that corresponds to the ARP message includes: 1) forwarding to the controller.

Step 909: The controller receives a user packet that is sent from the switch according to the second ARP request flow rule, and parses by means of analysis a destination IP address that currently needs to be requested and that is carried in the request.

Step 910: If finding a MAC address corresponding to the destination IP address that currently needs to be requested, the controller creates a third ARP request flow rule, and then sends the third ARP request flow rule to the switch.

Step 911: The switch receives the third ARP request flow rule delivered by the controller, constructs an ARP request message according to the third ARP request flow rule, and sends the ARP request message.

All descriptions of step 912 to step 914 are the same as those of step 806 to step 808.

According to the method for processing an Address Resolution Protocol message that is provided in this embodiment of the present invention, a user packet sent from an external device can be processed; in a case in which matching performed on information about the user packet and a match rule in a first ARP request flow rule does not succeed, matching may be performed on the information about the user packet and a match rule in a second ARP request flow rule; and the user packet can be sent to a controller, and according to a third ARP request flow rule delivered by the controller, an ARP request message can be constructed, and the ARP request message can be sent to the external device. Therefore, ARP-mechanism-based interaction with the external device is implemented.

### Embodiment 7

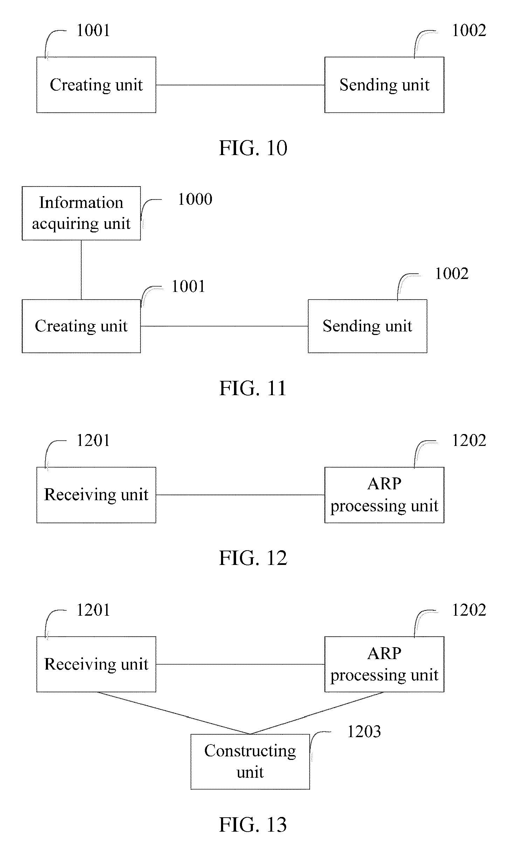

This embodiment provides a controller. Referring to FIG. 10, the controller includes:
a creating unit 1001, configured to create a flow rule that corresponds to the ARP message, and output the flow rule to a sending unit 1002, where the flow rule includes: a match rule that corresponds to the ARP message and an action set that corresponds to the ARP message; and
the sending unit 1002, configured to send the received flow rule to a switch, where
the creating unit 1001 is specifically configured to create an ARP response flow rule.

Optionally, the creating unit 1001 is specifically configured to create a first ARP request flow rule.

The creation unit 1001 is further configured to create a second ARP request flow rule after creating the first ARP request flow rule.

Optionally, the creating unit 1001 is further configured to receive a flow table request that is sent from the switch according to the second ARP request flow rule, and create a third ARP request flow rule, where
for the ARP response flow rule, the first ARP request flow rule, the second ARP request flow rule, and the third ARP request flow rule, reference is made to the method embodiments.

A controller provided in this embodiment of the present invention can create a flow rule, and send the flow rule to a switch.

Referring to FIG. 11, in an implementation manner of this embodiment of the present invention, the controller may further include: an information acquiring unit 1000, configured to acquire a correspondence between a switch port of the switch and an IP address and a MAC address of the port, and send information about the correspondence to the creating unit 1001.

In other two implementation manners of this embodiment of the present invention, the sending unit 1002 includes:
a first sending subunit, configured to receive multiple flow rules sent from the creating unit 1001, add the multiple flow rules to one OpenFlow message, and send the one OpenFlow message to the switch; or
a second sending subunit, configured to receive multiple flow rules sent from the creating unit 1001, respectively add the multiple flow rules to multiple OpenFlow messages, and send the multiple OpenFlow messages to the switch.

Content such as information exchange and execution processes of the units and the subunits in the device is based on a concept that is the same as that of the method embodiments of the present invention; therefore, for the specific content, reference may be made to the descriptions in the method embodiments of the present invention, and details are not described herein again.

A controller provided in this embodiment of the present invention can create flow rules, add the multiple flow rules to one OpenFlow message, and send the one OpenFlow message to a switch, which can save a network resource.

### Embodiment 8

This embodiment provides a switch. Referring to FIG. 12, the switch includes:
a receiving unit 1201, configured to receive a flow rule that corresponds to an ARP message and that is sent from a controller, and send the flow rule to an ARP processing unit 1202; and
the ARP processing unit 1202, configured to construct an ARP message according to the received flow rule, and send the ARP message, where the flow rule includes: a match rule that corresponds to an ARP message and an action set that corresponds to an ARP message.

Optionally, the ARP processing unit 1202 may include a first processing subunit, where the receiving unit 1201 is further configured to receive an ARP request message sent from an external device; and send the ARP request message to the first processing subunit; and
the first processing subunit is configured to parse out an ARP response flow rule included in the received flow rule, where in the ARP response flow rule, the match rule that corresponds to the ARP message includes the following information: a message type is ARP message; and a requested address is an IP address bound to a switch port; and the action set that corresponds to the ARP message includes: constructing an ARP response message, where a media access control (MAC) address of the ARP response message is a MAC address corresponding to an IP address requested in a received ARP request message; and forwarding the ARP response message, where a forwarding port number is an ingress port number of an ARP request packet; and after the ARP request message is received, perform matching between information carried in the ARP request message and the match rule in the ARP response flow rule, and if the matching succeeds, construct an ARP response message according to the action set in the ARP response flow rule, and fill, in the ARP response message, a MAC address corresponding to an IP address requested in the received ARP request message; and then forward the ARP response message by using an ingress port of the ARP request packet.

The ARP processing unit 1202 may further include a second processing subunit, where
the receiving unit 1201 is further configured to receive a user packet, and forward the user packet to the second processing subunit; and
the second processing subunit is configured to parse out a first ARP request flow rule included in the received flow rule, where in the first ARP request flow rule, the match rule that corresponds to the ARP message includes the following information: a packet type is IP packet; and a destination IP address is a preset IP address; and the action set that corresponds to the ARP message includes: constructing a first ARP request message, where a destination IP address in the first ARP request message is the preset IP address; and a forwarding port number is a set forwarding port number or all forwarding port numbers; and after the user packet is received, if it is detected that a MAC address corresponding to a destination IP address of the packet does not exist, perform matching between information about the user packet and the match rule in the first ARP request flow rule, and if the matching succeeds, construct a first ARP request message according to the action set in the first ARP request flow rule, where a destination IP address in the first ARP request message is the preset IP address, and send the first ARP request message by using a set forwarding port or all forwarding ports.

In the first ARP request flow rule, the match rule that corresponds to the ARP message further includes the following information: a mask has a first mask value; and
correspondingly, the performing matching between information about the user packet and the match rule in the first ARP request flow rule specifically includes:
determining whether the user packet is an IP packet, and if yes, determining whether a result of a predetermined operation on the destination IP address in the user packet and the first mask value is the same as a result of the predetermined operation on the preset IP address and the first mask value, where if they are the same, it is considered that the matching succeeds.

Optionally, the second processing subunit is further configured to parse out a second ARP request flow rule included in the flow rule, where in the second ARP request flow rule, the match rule that corresponds to the ARP message includes the following information: a packet type is that a MAC address corresponding to an IP address does not exist; and the action set that corresponds to the ARP message includes: forwarding to the controller; and after the matching is performed on the match rule in the first ARP request flow rule according to the user packet, and the matching fails, further perform matching between the information about the received user packet and the match rule in the second ARP request flow rule, and if the matching succeeds, forward the user packet to the controller according to the action set in the second ARP request flow rule; and receive a third ARP request flow rule that includes the destination IP address in the user packet and that is delivered by the controller, construct a second ARP request message according to the third ARP request flow rule, and send the second ARP request message.

A switch provided in this embodiment of the present invention can receive a flow rule that corresponds to an ARP message and that is sent from a controller, where the flow rule includes a match rule that corresponds to an ARP message and an action set that corresponds to an ARP message, and the switch can construct an ARP message according to the received flow rule, and send the ARP message. Therefore, ARP-mechanism-based interaction with an external device is implemented.

Referring to FIG. 13, in an exemplary implementation of the switch in this embodiment, the switch may further include: a constructing unit 1203, where
the receiving unit 1201 is further configured to receive an ARP response message sent from an external device, and send the ARP response message to the constructing unit 1203; and receive a data packet on a connection on which the user packet is located, and send the data packet to the second processing subunit;
the constructing unit 1203 is configured to construct an ARP encapsulation flow rule according to the received ARP response message; and
the second processing subunit is further configured to perform matching between information about the received data packet and a match rule in the ARP encapsulation flow rule constructed by the constructing unit 1203, and after the matching succeeds, encapsulate a destination MAC address of the ARP response message into the data packet according to an action set in the ARP encapsulation flow rule, and then send the encapsulated data packet, where for the ARP encapsulation flow rule, reference is made to the method embodiments.

Content such as information exchange and execution processes of the units and the subunits in the device is based on a concept that is the same as that of the method embodiments of the present invention; therefore, for the specific content, reference may be made to the descriptions in the method embodiments of the present invention, and details are not described herein again.

### Embodiment 9

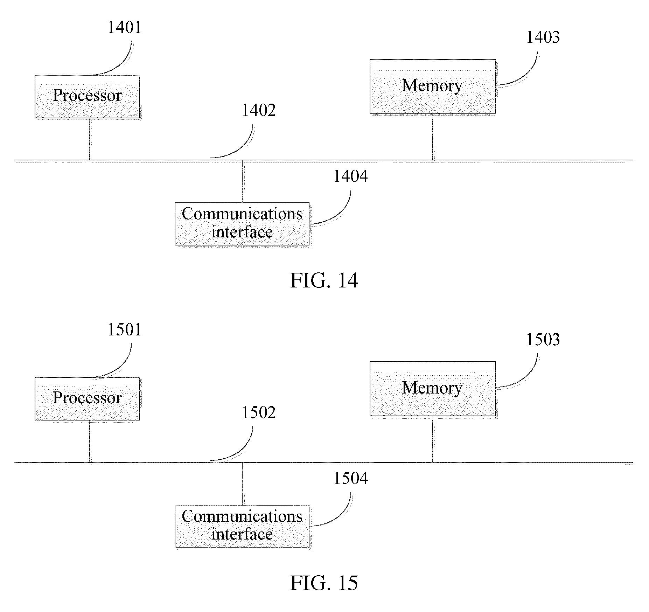

This embodiment provides a switch. Referring to FIG. 14, the switch uses a structure of a general-purpose computer system, where the computer system may be specifically a computer based on a processor. As shown in FIG. 14, the switch includes at least one processor 1401, a communications bus 1402, a memory 1403, and at least one communications interface 1404.

The processor 1401 may be a CPU, a micro processor, an application specific integrated circuit ASIC, or one or more integrated circuits used to control execution of a program in a solution in the present invention.

The communications bus 1402 may include a channel, to transmit information between the foregoing components. The communications interface 1404 may be any apparatus such as a transceiver, and is configured to communicate with another device or a communications network, such as the Ethernet, an RAN, or a WLAN.

The computer system includes one or more memories, which may be a read-only memory ROM, a static storage device of another type that can store static information and an instruction, a random access memory RAM, or a dynamic storage device of another type that can store information and an instruction, or may be an electrically erasable programmable read-only memory EEPROM, a read-only optical disc CD-ROM or another optical disc storage, a disc storage (including a compact disc, a laser disc, an optical disc, a digital versatile disc, a Blu-ray disc, or the like), a magnetic disk storage medium or another magnetic disk storage device, or any other medium that can be used to carry or store expected program code in an instruction or data structure form and that can be accessed by a computer, but the present invention is not limited thereto. These memories are connected to the processor by using the bus.

The memory 1403 is configured to store application program code used to execute a solution in the present invention, where the application program code used to execute a solution in the present invention is stored in the memory, and execution of the application program code is controlled by the processor 1401. The processor 1401 is configured to execute an application program stored in the memory 1403.

In a possible implementation manner, when the application program is executed by the processor 1401, the following functions are implemented:
receiving, by the switch, a flow rule that corresponds to an ARP message and that is sent from a controller; and
constructing, by the switch, an ARP message according to the received flow rule, and sending the ARP message, where
the flow rule includes: a match rule that corresponds to an ARP message and an action set that corresponds to an ARP message.

Optionally, the flow rule includes an ARP response flow rule, where in the ARP response flow rule:
the match rule that corresponds to the ARP message includes the following information: a message type is ARP message; and a requested address is an IP address bound to a switch port; and
the action set that corresponds to the ARP message includes: constructing an ARP response message, where a media access control (MAC) address of the ARP response message is a MAC address corresponding to an IP address requested in a received ARP request message.

Optionally, the constructing, by the switch, an ARP message according to the received flow rule, and sending the ARP message includes:
receiving, by the switch, an ARP request message sent from an external device; performing matching between information carried in the ARP request message and the match rule in the ARP response flow rule, and if the matching succeeds, constructing an ARP response message according to the action set in the ARP response flow rule, and filling, in the ARP response message, a MAC address corresponding to an IP address requested in the received ARP request message; and then forwarding the ARP response message by using an ingress port of an ARP request packet.

Optionally, the flow rule includes a first ARP request flow rule, where in the first ARP request flow rule, the match rule that corresponds to the ARP message includes the following information: a packet type is IP packet; and a destination IP address is a preset IP address; and
the action set that corresponds to the ARP message includes: constructing a first ARP request message, where a destination IP address in the first ARP request message is the preset IP address; and a forwarding port number is a set forwarding port number or all forwarding port numbers.

Optionally, the constructing, by the switch, an ARP message according to the received flow rule, and sending the ARP message includes:
receiving, by the switch, a user packet, if detecting that a MAC address corresponding to a destination IP address of the packet does not exist, performing matching between information about the user packet and the match rule in the first ARP request flow rule, and if the matching succeeds, constructing a first ARP request message according to the action set in the first ARP request flow rule, where a destination IP address in the first ARP request message is the preset IP address, and sending the first ARP request message by using a set forwarding port or all forwarding ports.

Optionally, in the first ARP request flow rule, the match rule that corresponds to the ARP message further includes the following information: a mask has a first mask value.

Optionally, the performing matching between information about the user packet and the match rule in the first ARP request flow rule specifically includes:
determining whether the user packet is an IP packet, and if yes, determining whether a result of a predetermined operation on the destination IP address in the user packet and the first mask value is the same as a result of the predetermined operation on the preset IP address and the first mask value, where if they are the same, it is considered that the matching succeeds.

Optionally, the flow rule includes a second ARP request flow rule, where in the second ARP request flow rule:
the match rule that corresponds to the ARP message includes the following information: a packet type is that a MAC address corresponding to an IP address does not exist; and the action set that corresponds to the ARP message includes: forwarding to the controller; and
after the matching is performed between the information about the user packet and the match rule in the first ARP request flow rule, and the matching fails, the method further includes:
   performing, by the switch, matching between the information about the received user packet and the match rule in the second ARP request flow rule, and if the matching succeeds, forwarding the user packet to the controller according to the action set in the second ARP request flow rule; and receiving a third ARP request flow rule delivered by the controller, constructing a second ARP request message according to the third ARP request flow rule, and sending the second ARP request message, where in the third ARP request flow rule:
      the match rule that corresponds to the ARP message includes the following information: a matching cause value is that a MAC address corresponding to a first IP address does not exist; a packet type is IP packet; and a destination IP address is the first IP address; and
      the action set that corresponds to the ARP message includes: constructing a second ARP request message, where a destination IP address in the second ARP request message is the first IP address; and a forwarding port number is a set forwarding port number or all forwarding port numbers.

Optionally, after the sending the ARP request message, the method further includes:
receiving, by the switch, an ARP response message sent from an external device, and constructing an ARP encapsulation flow rule according to the ARP response message; and receiving a data packet on a connection on which the user packet is located, performing matching between information about the data packet and a match rule in the ARP encapsulation flow rule, and if the matching succeeds, encapsulating a destination MAC address of the ARP response message into the data packet according to an action set in the ARP encapsulation flow rule, and then sending the encapsulated data packet, where in the ARP encapsulation flow rule, the match rule that corresponds to the ARP message includes the following information: a packet type is IP packet; and a destination IP address is a destination IP address in the user packet; and
the action set that corresponds to the ARP message includes: encapsulating a destination MAC address of a packet, where the destination MAC address is the destination MAC address of the ARP response message; and forwarding the packet, where a forwarding port number is an ingress port number of the ARP response message.

Optionally, the receiving, by the switch, a flow rule that corresponds to an ARP message and that is sent from a controller specifically includes:
receiving, by the switch, one flow rule carrying OpenFlow message that is sent from the controller, where the one OpenFlow message carries multiple flow rules.

In this embodiment, for a method for the switch to interact with another device when the application program is executed by the processor, reference may be made to the foregoing method embodiments. Details are not described herein again.

A switch provided in this embodiment of the present invention can receive a flow rule that corresponds to an ARP message and that is sent from a controller, where the flow rule includes a match rule that corresponds to an ARP message and an action set that corresponds to an ARP message, and the switch can construct an ARP message according to the received flow rule, and send the ARP message. Therefore, ARP-mechanism-based interaction with an external device is implemented.

### Embodiment 10

This embodiment provides a controller. Referring to FIG. 15, the controller uses a structure of a general-purpose computer system, where the computer system may be specifically a computer based on a processor. As shown in FIG. 15, the controller includes at least one processor 1501, a communications bus 1502, a memory 1503, and at least one communications interface 1504.

The processor 1501 may be a CPU, a micro processor, an application specific integrated circuit ASIC, or one or more integrated circuits used to control execution of a program in a solution in the present invention.

The communications bus 1502 may include a channel, to transmit information between the foregoing components. The communications interface 1504 may be any apparatus such as a transceiver, and is configured to communicate with another device or a communications network, such as the Ethernet, an RAN, or a WLAN.

The computer system includes one or more memories, which may be a read-only memory ROM, a static storage device of another type that can store static information and an instruction, a random access memory RAM, or a dynamic storage device of another type that can store information and an instruction, or may be an electrically erasable programmable read-only memory EEPROM, a read-only optical disc CD-ROM or another optical disc storage, a disc storage (including a compact disc, a laser disc, an optical disc, a digital versatile disc, a Blu-ray disc, or the like), a magnetic disk storage medium or another magnetic disk storage device, or any other medium that can be used to carry or store expected program code in an instruction or data structure form and that can be accessed by a computer, but the present invention is not limited thereto. These memories are connected to the processor by using the bus.

The memory 1503 is configured to store application program code used to execute a solution in the present invention, where the application program code used to execute a solution in the present invention is stored in the memory, and execution of the application program code is controlled by the processor 1501. The processor 1501 is configured to execute an application program stored in the memory 1503.

In a possible implementation manner, when the application program is executed by the processor 1401, the following functions are implemented:
creating, by the controller, a flow rule that corresponds to the ARP message, where each flow rule includes: a match rule that corresponds to the ARP message and an action set that corresponds to the ARP message; and
sending, by the controller, the created flow rule to a switch.

Optionally, the flow rule includes an ARP response flow rule, a first ARP request flow rule, and a second ARP request flow rule.

Optionally, before the creating, by the controller, a flow rule that corresponds to the ARP message, the implementation manner further includes: acquiring, by the controller, a correspondence between a switch port of the switch and an IP address and a MAC address of the port.

Optionally, the acquiring a correspondence between a switch port of the switch and an IP address and a MAC address of the port includes:
a manner 1: directly acquiring, by the controller, the correspondence between a switch port of the switch and an IP address and a MAC address of the port according to a preset static configuration or from a third-party device; and
a manner 2: acquiring, by the controller, first information according to a preset static configuration or from a third-party device, where the first information includes: a switch identifier, a switch port identifier, and a port IP address corresponding to the switch port identifier; receiving second information reported by the switch, where the second information includes: the switch port identifier and a MAC address corresponding to the switch port identifier; and acquiring a correspondence between the switch identifier, the switch port identifier, and an IP address and a MAC address of the port according to the first information and the second information.

Optionally, when the flow rule created by the controller includes a flow rule 4, that is, a third ARP request flow rule, after the sending, by the controller, the created flow rule to a switch, the implementation manner further includes: receiving, by the controller, a flow table request that is sent from the switch according to a second ARP request flow rule, where the request carries a destination IP address that currently needs to be requested; and if finding a MAC address corresponding to the destination IP address that currently needs to be requested and that is carried in the flow table request, creating, by the controller, the third ARP request flow rule, and then sending the third ARP request flow rule to the switch, to ensure that the switch can construct a required ARP request message.

A controller provided in this embodiment of the present invention can create a flow rule, and send the flow rule to a switch.

### Embodiment 11

This embodiment provides an SDN system, including a controller with any structure and function in Embodiment 7 and a switch with any structure and function in Embodiment 8.

Content such as information exchange and execution processes of the units and the subunits in the device is based on a concept that is the same as that of the method embodiments of the present invention; therefore, for the specific content, reference may be made to the descriptions in the method embodiments of the present invention, and details are not described herein again.

The method for processing an ARP message, the switch, and the controller that are provided in embodiments of the present invention have at least the following beneficial effects.
1. According to the method for processing an ARP message, the switch, and the controller that are provided in the embodiments of the present invention, a switch can receive a flow rule that corresponds to an ARP message and that is sent from a controller, where the flow rule includes a match rule that corresponds to an ARP message and an action set that corresponds to an ARP message, and the switch can construct an ARP message according to the received flow rule, and send the ARP message. Therefore, ARP-mechanism-based interaction with an external device is implemented.
2. The embodiments of the present invention may be implemented based on an existing flow table matching and processing mechanism of the OpenFlow protocol, without a need to add an additional mechanism for the switch to implement an ARP processing capability; therefore, the switch is modified least, and is easier to be implemented.

A person of ordinary skill in the art may understand that, each aspect of the present invention or a possible implementation manner of each aspect may be specifically implemented as a system, a method, or a computer program product. Therefore, each aspect of the present invention or a possible implementation manner of each aspect may use forms of hardware only embodiments, software only embodiments (including firmware, resident software, and the like), or embodiments with a combination of software and hardware, which are uniformly referred to as "circuit", "module", or "system" herein. In addition, each aspect of the present invention or the possible implementation manner of each aspect may take a form of a computer program product, where the computer program product refers to computer-readable program code stored in a computer-readable medium.

The computer-readable medium may be a computer-readable signal medium or a computer-readable storage medium. The computer-readable storage medium includes but is not limited to an electronic, magnetic, optical, electromagnetic, infrared, or semi-conductive system, device, or apparatus, or any appropriate combination thereof, such as a random access memory (RAM), a read-only memory (ROM), an erasable programmable read only memory (EPROM or flash memory), an optical fiber, and a compact disc read only memory (CD-ROM).

A processor in a computer reads computer-readable program code stored in a computer-readable medium, so that the processor can perform a function and an action specified in each step or a combination of steps in a flowchart; an apparatus is generated to implement a function and an action specified in each block or a combination of blocks in a block diagram.

All computer-readable program code may be executed on a user computer, or some may be executed on a user computer as a standalone software package, or some may be executed on a computer of a user while some is executed on a remote computer, or all the code may be executed on a remote computer or a server. It should also be noted that, in some alternative implementation solutions, each step in the flowcharts or functions specified in each block in the block diagrams may not occur in the illustrated order. For example, two consecutive steps or two blocks in the illustration, which are dependent on an involved function, may in fact be executed substantially at the same time, or these blocks may sometimes be executed in reverse order.

Obviously, a person skilled in the art can make various modifications and variations to the present invention without departing from the spirit and scope of the present invention. The present invention is intended to cover these modifications and variations provided that they fall within the scope of protection defined by the following claims and their equivalent technologies.

## Claims

1. A method for processing an address resolution protocol (ARP) message, comprising:
receiving, by a switch, a flow rule that corresponds to an ARP message and that is sent from a controller; and
constructing, by the switch, an ARP message according to the received flow rule, and sending the ARP message, wherein the flow rule comprises: a match rule that corresponds to an ARP message and an action set that corresponds to an ARP message.

2. The method for processing an address resolution protocol message according to claim 1, wherein the flow rule comprises an ARP response flow rule, and in the ARP response flow rule:
the match rule that corresponds to an ARP message comprises the following information: a message type is ARP message, and a requested address is an IP address bound to a switch port; and
the action set that corresponds to the ARP message comprises: constructing an ARP response message, wherein a media access control (MAC) address of the ARP response message is a MAC address corresponding to an IP address requested in a received ARP request message; and
correspondingly, the constructing, by the switch, the ARP message according to the received flow rule, and sending the ARP message specifically comprises:
receiving, by the switch, an ARP request message sent from an external device;
performing matching between information carried in the ARP request message and the match rule in the ARP response flow rule; and
if the matching succeeds, constructing an ARP response message according to the action set in the ARP response flow rule, and filling, in the ARP response message, a MAC address corresponding to an IP address requested in the received ARP request message; and then forwarding the ARP response message by using an ingress port of an ARP request packet.

3. The method for processing an address resolution protocol message according to claim 1,
wherein
the flow rule comprises a first ARP request flow rule, wherein in the first ARP request flow rule, the match rule that corresponds to the ARP message comprises the following information: a packet type is IP packet, and a destination IP address is a preset IP address; and
the action set that corresponds to the ARP message comprises: constructing a first ARP request message, wherein a destination IP address in the first ARP request message is the preset IP address;
and a forwarding port number is a set forwarding port number or all forwarding port numbers; and
correspondingly, the constructing, by the switch, the ARP message according to the received flow rule, and sending the ARP message specifically comprises:
receiving, by the switch, a user packet;
if detecting that a MAC address corresponding to a destination IP address of the packet does not exist, performing matching between information about the user packet and the match rule in the first ARP request flow rule, and if the matching succeeds, constructing a first ARP request message according to the action set in the first ARP request flow rule, wherein a destination IP address in the first ARP request message is the preset IP address, and sending the first ARP request message by using a set forwarding port or all forwarding ports.

4. The method for processing an address resolution protocol message according to claim 3,
wherein
in the first ARP request flow rule, the match rule that corresponds to the ARP message further comprises the following information: a mask has a first mask value; and
correspondingly, the performing matching between the information about the user packet and the match rule in the first ARP request flow rule specifically comprises:
determining whether the user packet is an IP packet; and
if the user packet is an IP packet, determining whether a result of a predetermined operation on the destination IP address in the user packet and the first mask value is the same as a result of the predetermined operation on the preset IP address and the first mask value, wherein if they are the same, determining that the matching succeeds.

5. The method for processing an address resolution protocol message according to claim 3 or 4, wherein the flow rule comprises a second ARP request flow rule, and in the second ARP request flow rule:
the match rule that corresponds to the ARP message comprises the following information: a packet type is that a MAC address corresponding to an IP address does not exist; and the action set that corresponds to the ARP message comprises: forwarding to the controller; and
correspondingly, after the matching is performed between the information about the user packet and the match rule in the first ARP request flow rule, and the matching fails, the method further comprises:
performing, by the switch, matching between the information about the received user packet and the match rule in the second ARP request flow rule; and
if the matching succeeds, forwarding the user packet to the controller according to the action set in the second ARP request flow rule;
receiving a third ARP request flow rule delivered by the controller;
constructing a second ARP request message according to the third ARP request flow rule; and
sending the second ARP request message,
wherein in the third ARP request flow rule:
the match rule that corresponds to the ARP message comprises the following information: a matching cause value is that a MAC address corresponding to a first IP address does not exist; a packet type is IP packet; and a destination IP address is the first IP address; and
the action set that corresponds to the ARP message comprises: constructing a second ARP request message, wherein a destination IP address in the second ARP request message is the first IP address; and a forwarding port number is a set forwarding port number or all forwarding port numbers.

6. The method for processing an address resolution protocol message according to any one of claims 3 to 5, wherein after the sending the ARP request message, the method further comprises:
receiving, by the switch, an ARP response message sent from an external device, and constructing an ARP encapsulation flow rule according to the ARP response message; and receiving a data packet on a connection on which the user packet is located, performing matching between information about the data packet and a match rule in the ARP encapsulation flow rule, and if the matching succeeds, encapsulating a destination MAC address of the ARP response message into the data packet according to an action set in the ARP encapsulation flow rule, and then sending the encapsulated data packet, wherein in the ARP encapsulation flow rule, the match rule that corresponds to the ARP message comprises the following information: a packet type is IP packet; and a destination IP address is a destination IP address in the user packet; and
the action set that corresponds to the ARP message comprises: encapsulating a destination MAC address of a packet, wherein the destination MAC address is the destination MAC address of the ARP response message; and forwarding the packet, wherein a forwarding port number is an ingress port number of the ARP response message.

7. The method for processing an address resolution protocol message according to any one of claims 1 to 5, wherein
the receiving, by the switch, the flow rule that corresponds to the ARP message and that is sent from the controller specifically comprises:
receiving, by the switch, one flow rule carrying OpenFlow message that is sent from the controller, wherein the one OpenFlow message carries multiple flow rules.

8. A switch, comprising:
a receiving unit, configured to receive a flow rule that corresponds to an address resolution protocol (ARP) message and that is sent from a controller, and send the flow rule to an ARP processing unit; and
the ARP processing unit, configured to construct an ARP message according to the received flow rule, and send the ARP message, wherein the flow rule comprises: a match rule that corresponds to an ARP message and an action set that corresponds to an ARP message.

9. The switch according to claim 8, wherein the ARP processing unit comprises a first processing subunit, wherein
the receiving unit is further configured to receive an ARP request message sent from an external device; and send the ARP request message to the first processing subunit; and
the first processing subunit is configured to parse out an ARP response flow rule comprised in the received flow rule; after the ARP request message is received, perform matching between information carried in the ARP request message and the match rule in the ARP response flow rule, and if the matching succeeds, construct an ARP response message according to the action set in the ARP response flow rule, and fill, in the ARP response message, a MAC address corresponding to an IP address requested in the received ARP request message; and then forward the ARP response message by using an ingress port of an ARP request packet, wherein
in the ARP response flow rule, the match rule that corresponds to the ARP message comprises the following information: a message type is ARP message; and a requested address is an IP address bound to a switch port; and the first processing subunit is further configured to construct an ARP response message, wherein a media access control (MAC) address of the ARP response message is a MAC address corresponding to an IP address requested in a received ARP request message; and forward the ARP response message, wherein a forwarding port number is an ingress port number of the ARP request packet.

10. The switch according to claim 8, wherein the ARP processing unit comprises a second processing subunit, wherein
the receiving unit is further configured to receive a user packet, and forward the user packet to the second processing subunit; and
the second processing subunit is configured to parse out a first ARP request flow rule comprised in the received flow rule; and after the user packet is received, if it is detected that a MAC address corresponding to a destination IP address of the packet does not exist, perform matching between information about the user packet and the match rule in the first ARP request flow rule, and if the matching succeeds, construct a first ARP request message according to the action set in the first ARP request flow rule, wherein a destination IP address in the first ARP request message is a preset IP address, and send the first ARP request message by using a set forwarding port or all forwarding ports, wherein
in the first ARP request flow rule, the match rule that corresponds to the ARP message comprises the following information: a packet type is IP packet; and a destination IP address is the preset IP address; and the second processing subunit is further configured to construct a first ARP request message, wherein a destination IP address in the first ARP request message is the preset IP address; and a forward port number is a set forwarding port number or all forwarding port numbers.

11. The switch according to claim 10, wherein in the first ARP request flow rule, the match rule that corresponds to the ARP message further comprises the following information: a mask has a first mask value; and
wherein the second processing subunit is further configured to determine whether the user packet is an IP packet, and if yes, determine whether a result of a predetermined operation on the destination IP address in the user packet and the first mask value is the same as a result of the predetermined operation on the preset IP address and the first mask value, wherein if they are the same, determine that the matching succeeds.

12. The switch according to claim 10 or 11, wherein the second processing subunit is further configured to parse out a second ARP request flow rule comprised in the flow rule, after the matching is performed on the match rule in the first ARP request flow rule according to the user packet, and the matching fails, further perform matching between the information about the received user packet and the match rule in the second ARP request flow rule, and if the matching succeeds, forward the user packet to the controller according to the action set in the second ARP request flow rule; and receive a third ARP request flow rule that comprises the destination IP address in the user packet and that is delivered by the controller, construct a second ARP request message according to the third ARP request flow rule, and send the second ARP request message, wherein
in the second ARP request flow rule, the match rule that corresponds to the ARP message comprises the following information: a packet type is that a MAC address corresponding to an IP address does not exist; and the action set that corresponds to the ARP message comprises: forwarding to the controller.

13. The switch according to any one of claims 10 to 12, wherein the switch further comprises:
a constructing unit, wherein
the receiving unit is further configured to receive an ARP response message sent from an external device, and send the ARP response message to the constructing unit; and receive a data packet on a connection on which the user packet is located, and send the data packet to the second processing subunit;
the constructing unit is configured to construct an ARP encapsulation flow rule according to the received ARP response message;
the second processing subunit is further configured to perform matching between information about the received data packet and a match rule in the ARP encapsulation flow rule constructed by the constructing unit, and after the matching succeeds, encapsulate a destination MAC address of the ARP response message into the data packet according to an action set in the ARP encapsulation flow rule, and then send the encapsulated data packet, wherein in the ARP encapsulation flow rule, the match rule that corresponds to the ARP message comprises the following information: a packet type is IP packet; and a destination IP address is a destination IP address in the user packet; and
the action set that corresponds to the ARP message comprises:
encapsulating a destination MAC address of a packet, wherein the destination MAC address is the destination MAC address of the ARP response message; and forwarding the packet, wherein a forwarding port number is an ingress port number of the ARP response message.

14. A controller, comprising:
a creating unit, configured to create a flow rule that corresponds to an address resolution protocol (ARP) message, and output the flow rule to a sending unit, wherein the flow rule comprises: a match rule that corresponds to the ARP message and an action set that corresponds to the ARP message; and
the sending unit, configured to send the received flow rule to a switch.

15. The controller according to claim 14, wherein the creating unit is specifically configured to create an ARP response flow rule, wherein in the ARP response flow rule:
the match rule that corresponds to the ARP message comprises the following information: a message type is ARP message; and a requested address is an IP address bound to a switch port; and
the action set that corresponds to the ARP message comprises: constructing an ARP response message, wherein a media access control (MAC) address of the ARP response message is a MAC address corresponding to an IP address requested in a received ARP request message; and forwarding the ARP response message, wherein a forwarding port number is an ingress port number of an ARP request packet.

16. The controller according to claim 14, wherein
the creating unit is specifically configured to create a first ARP request flow rule, wherein in the first ARP request flow rule:
the match rule that corresponds to the ARP message comprises the following information: a packet type is IP packet; and a destination IP address is a preset IP address; and
the action set that corresponds to the ARP message comprises: constructing a first ARP request message, wherein a destination IP address in the first ARP request message is the preset IP address; and a forwarding port number is a set forwarding port number or all forwarding port numbers.

17. The controller according to claim 16, wherein
the creating unit is further configured to create a second ARP request flow rule, wherein in the second ARP request flow rule:
the match rule that corresponds to the ARP message comprises the following information: a packet type is that a MAC address corresponding to an IP address does not exist; and
the action set that corresponds to the ARP message comprises: forwarding to the controller.

18. The controller according to claim 17, wherein the creating unit is further configured to receive a flow table request that is sent from the switch according to the second ARP request flow rule, and create a third ARP request flow rule, wherein in the third ARP request flow rule:
the match rule that corresponds to the ARP message comprises the following information: a matching cause value is that a MAC address corresponding to a first IP address does not exist; a packet type is IP packet; and a destination IP address is the first IP address; and
the action set that corresponds to the ARP message comprises: constructing a second ARP request message, wherein a destination IP address in the second ARP request message is the first IP address; and a forwarding port number is a set forwarding port number or all forwarding port numbers.
